(19) Europäisches Patentamt
European Patent Office
Office européen des brevets

(11) **EP 4 528 868 A1**

(12) **EUROPEAN PATENT APPLICATION**
published in accordance with Art. 153(4) EPC


(43) Date of publication:
**26.03.2025 Bulletin 2025/13**

(21) Application number: **23881576.5**

(22) Date of filing: **26.09.2023**

(51) International Patent Classification (IPC):
***H01M 10/0525*** *(2010.01)* ***H01M 10/0567*** *(2010.01)*
***H01M 10/0566*** *(2010.01)*

(52) Cooperative Patent Classification (CPC):
**H01M 10/0567; H01M 4/133; H01M 4/134; H01M 4/366; H01M 4/386; H01M 4/587; H01M 10/0525; H01M 10/0568; H01M 10/0569;**
H01M 2004/027; H01M 2300/0025; Y02E 60/10

(86) International application number:
**PCT/CN2023/121572**

(87) International publication number:
**WO 2024/087997 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.10.2022 CN 202211318533**



(71) Applicant: **Zhuhai CosMX Battery Co., Ltd.**
**Zhuhai, Guangdong 519180 (CN)**

(72) Inventors:
- **QIU, Yaming**
  **Zhuhai, Guangdong 519180 (CN)**
- **WANG, Hai**
  **Zhuhai, Guangdong 519180 (CN)**
- **LI, Suli**
  **Zhuhai, Guangdong 519180 (CN)**
- **LI, Junyi**
  **Zhuhai, Guangdong 519180 (CN)**

(74) Representative: **Murgitroyd & Company**
**165-169 Scotland Street**
**Glasgow G5 8PL (GB)**


(54) **BATTERY**


(57) Disclosed is a battery, including a negative electrode plate and an electrolyte solution a single-sided region and a double-sided region; a ratio A of a thickness of the single-sided region to a thickness of the double-sided region ranges from 0.5 to 0.65; the electrolyte solution includes ethyl propionate and/or propyl propionate; based on a total weight of the electrolyte solution, a content B wt% of the ethyl propionate ranges from 0 wt% to 50 wt%, and a content C wt% of the propyl propionate ranges from 0 wt% to 60 wt%; then, A, B and C satisfy a relationship that $2B + C \geq 400*(A - 0.5)$. According to the battery, lithium deposition during cycling at a 1C charging rate or higher is prevented, stability and safety of the battery are improved, and a degree of self-discharge is reduced.


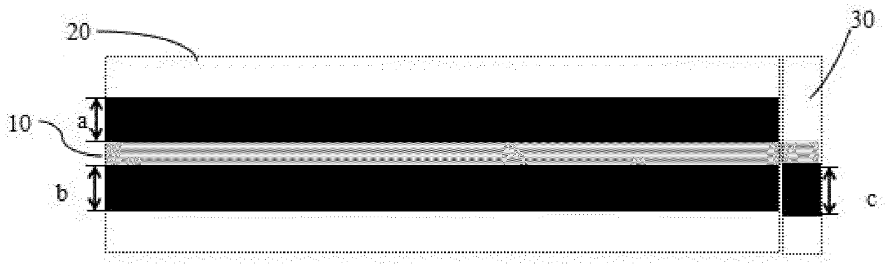


FIG. 2

EP 4 528 868 A1

## Description

### TECHNICAL FIELD

The present invention relates to the technical field of batteries, and specifically relates to a battery.

### BACKGROUND

Lithium-ion batteries have a long cycle life and a large energy density, and are therefore widely used in various electronic products, electric vehicles and energy storage devices. With the progress of science and technology, batteries need to pursue a faster charging speed, so that a charging time can be reduced, and further the batteries can be better used by people.

Charging rate is a measure of charging speed, which is numerically equal to a ratio of a charging current to a battery rated capacity, that is, "charging current/battery rated capacity = charging rate", and is usually in Unit of "C". At present, commercial lithium-ion batteries, including notebooks, mobile phones, automobiles and other lithium-ion batteries, have a charging rate basically above 1C.

When the charging rate is too high, a negative electrode of the battery may be subjected to lithium deposition due to insufficient dynamics, which will lead to rapid deterioration of the interface, increased self-discharge of the battery, accelerated battery attenuation, and even lead to safety accidents such as fire and explosion. By improving conductivity of an electrolyte solution and reducing viscosity, the charging rate of the battery can be significantly improved and lithium deposition can be prevented. However, due to the existence of a single-sided region and a double-sided region of the negative electrode, a small thickness of the single-sided region often leads to actual compaction less than designed compaction, which leads to poor dynamics and makes the single-sided region be an area more prone to lithium deposition.

Therefore, it is very important to invent a battery that can prevent lithium deposition at a high rate and has a low degree of self-discharge.

### SUMMARY

The objective of the present invention is to overcome the problems in a conventional technology by providing a battery. According to the battery, lithium deposition during cycling at a 1C charging rate or higher can be prevented, stability and safety of the battery are improved, and a degree of self-discharge of the battery is reduced at the same time.

The present invention provides a battery, where the battery includes a negative electrode plate and an electrolyte solution, a surface of the negative electrode plate is divided into a single-sided region and a double-sided region; the double-sided region is a double-side coated area, and a total thickness of double-sided coating layers is Y mm; the single-sided region is a single-side coated area, the other side corresponding to the single-sided region is a foil uncoating region, and a thickness of a single-sided coating layer is X mm; a ratio A of a thickness of the single-sided region to a thickness of the double-sided region ranges from 0.5 to 0.65; the electrolyte solution includes an organic solvent, and the organic solvent includes ethyl propionate and/or propyl propionate; based on a total weight of the electrolyte solution, a weight content B wt% of the ethyl propionate ranges from 0 wt% to 50 wt%, and a weight content C wt% of the propyl propionate ranges from 0 wt% to 60 wt%;then, A, B and C satisfy a relationship that $2B + C \geq 400 *(A - 0.5)$.

In an embodiment, the electrolyte solution further includes a first additive, and the first additive has a structure shown in Formula (I),

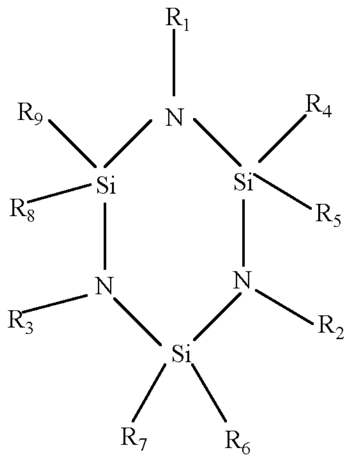

Formula (I),

where $R_1$, $R_2$, $R_3$, $R_4$, $R_5$, $R_6$, $R_7$, $R_8$ and $R_9$ are independently selected from H, substituted or unsubstituted C1-C10 alkyl, or -CN, and at least one of $R_1$, $R_2$ and $R_3$ is -CN; and the substituent is selected from halogen, -C(=O)-$R_a$, -C(=O)-O-C(=O)-$R_b$, $C_{6-14}$ aryl, or 5-14 membered heteroaryl, and $R_a$ and $R_b$ are independently selected from C1-C10 alkyl.

Based on the foregoing technical solutions, the present invention has at least the following advantages over the conventional technology.

(1) According to the battery of the present invention, lithium deposition during cycling at a 1C charging rate or higher can be prevented;
(2) the degree of self-discharge of the battery of the present invention is low;
(3) the stability of the battery of the present invention is high; and
(4) the safety of the battery of the present invention is high.

Other features and advantages of the present invention will be described in detail in the following detailed description of the embodiments.

## BRIEF DESCRIPTION OF THE DRAWINGS

FIG. 1 is a top structure view of a negative electrode plate according to an embodiment of the present invention.

FIG. 2 is a side structure view of the negative electrode plate according to the embodiment of the present invention.

## DETAILED DESCRIPTION OF THE EMBODIMENTS

Specific implementations of the present invention are described below in detail. It should be understood that the specific implementations described herein are merely used for the purposes of illustrating and explaining the present invention, rather than limiting the present invention.

The present invention provides a battery, where the battery includes a negative electrode plate and an electrolyte solution, a surface of the negative electrode plate is divided into a single-sided region and a double-sided region; the double-sided region is a double-side coated area, and a total thickness of double-sided coating layers is Y mm; the single-sided region is a single-side coated area, the other side corresponding to the single-sided region is a foil uncoating region, and a thickness of a single-sided coating layer is X mm; a ratio A of a thickness of the single-sided area to a thickness of the double-sided region ranges from 0.5 to 0.65; the electrolyte solution includes an organic solvent, the organic solvent includes ethyl propionate and/or propyl propionate, and based on the total weight of the electrolyte solution, a weight content B wt% of the ethyl propionate ranges from 0 wt% to 50 wt%, and a weight content C wt% of the propyl propionate ranges from 0 wt% to 60 wt%; then A, B and C satisfy a relationship that $2B + C \geq 400*(A - 0.5)$.

It is found that by improving the dynamics of the single-sided area of the negative electrode, lithium deposition can be prevented during cycling at a 1C charging rate or higher. The carboxylates in the electrolyte solution can reduce viscosity of the electrolyte solution and improve conductivity of the electrolyte solution, lithium deposition will still occur during cycling at a 1C charging rate or higher of the battery due to small compaction and poor dynamics of the single-side area of the negative electrode.

After further in-depth study, it is found that, in order to improve the dynamics of the single-sided region of the negative electrode, a compaction status of the single-sided region can be correlated with the carboxylates (i.e., the ethyl propionate (EP) and the propyl propionate (PP)) in the electrolyte solution, so as to improve the dynamics of the single-sided region, thereby preventing lithium deposition of the battery, improving stability and safety of the battery, and reducing a degree of self-discharge of the battery.

By setting the ratio A of the thickness of the single-sided area to the thickness of the double-sided region on the surface of the negative electrode plate, and the weight content B wt% of the ethyl propionate (EP) and the weight content C wt% of the propyl propionate (PP) to meet the relationship that $2B + C \geq 400*(A - 0.5)$, the battery has been able to achieve higher safety and lower discharge degree than the conventional technology. In order to further improve the effect, one or more technical features may be further optimized.

The surface of the negative electrode plate 10 is divided into a single-sided region 30 and a double-sided region 20 by using a division manner in a conventional way in the art. In one division manner as shown in FIG. 1, the single-sided area 30 is located at a head of a battery cell (a starting end of winding).

In an example, as shown in FIG. 2, the double-sided region 20 is a double-side coated area, that is, coating layers are provided on both sides of the negative electrode plate 10, a thickness of the coating layer on one side of the negative electrode plate 10 is a mm, and a thickness of the coating layer on the other side is b mm, where a and b may be the same or different. A total thickness Y mm of the double-sided coating layers is that Y mm = a mm + b mm, that is, a sum of the thicknesses of the coating layers on both sides of the double-sided coated area.

In an example, as shown in FIG. 2, the single-sided region 30 is a single-sided coated region of the negative electrode plate 10, that is, a coating layer is provided on one side of the surface of the negative electrode plate 10, the thickness of the coating layer is c mm, and the other side is not provided with a coating layer, which is a foil uncoating region; and a thickness of the single-sided coating layer is that X mm = c mm, that is, a thickness of the coating layer on the side provided with a coating layer.

In an example, the thickness of the single-sided coating layer is that X mm = c mm, which may be the same as a mm or b mm, and may also be different from a mm or b mm.

In an example, the thickness of the single-sided coating layer is that X mm = c mm > a mm, or the thickness of the single-sided coating layer is that X mm = c mm > b mm.

As shown in FIG. 2, the ratio (A = c mm/(a + b) mm) of the thickness of the single-sided area 30, i.e., the thickness (X mm = c mm) of the single-sided coating layer to the thickness of the double-sided region 20, i.e., the total thickness ( Y mm = a mm + b mm) of the double-sided coating layers ranges from 0.5 to 0.65 (for example, 0.52, 0.53, 0.55, 0.57, 0.6, 0.62, or 0.65).

In a preferred example, the ratio (A = c mm/(a + b) mm) of the thickness (X mm = c mm) of the single-sided area 30 to the thickness of the double-sided region 20 (Y mm = a mm + b mm) ranges from 0.53 to 0.57. The ratio A of the thickness of the single-sided area to the thickness of the double-sided region is defined in the above specific range, so that a compaction density of the single-sided area can be improved, excessive increase of the thickness of the single-sided area is reduced, a dynamic performance of the single-sided area is improved, lithium deposition in the single-sided area is reduced, and a safety performance of the battery is improved.

The organic solvent may include ethyl propionate (EP) and propyl propionate (PP); based on a total weight of the electrolyte solution, a weight content B wt% of the ethyl propionate ranges from 0 wt% to 50 wt% (for example, 0 wt%, 0.1 wt%, 0.5 wt%, 1 wt%, 5 wt%, 10 wt%, 15 wt%, 20 wt%, 25 wt%, 30 wt%, 35 wt%, 40 wt%, 45 wt%, or 50 wt%), and a weight content C wt% of the propyl propionate ranges from 0 wt% to 60 wt% (for example, 0 wt%, 0.1 wt%, 0.5 wt%, 1 wt%, 5 wt%, 10 wt%, 15 wt%, 20 wt%, 25 wt%, 30 wt%, 35 wt%, 40 wt%, 45 wt%, 50 wt%, 55 wt%, or 60 wt%), and B and C are not 0 simultaneously.

When B wt% is not 0 wt%, the electrolyte solution does not include ethyl propionate. When C wt% is not 0 wt%, the electrolyte solution does not include propyl propionate.

According to a preferred example, based on the total weight of the electrolyte solution, the weight content B wt% of the ethyl propionate ranges from 5 wt% to 25 wt%, and the weight content C wt% of the propyl propionate ranges from 5 wt% to 35 wt%. The ethyl propionate and the propyl propionate are both carboxylates. Although too many carboxylates can reduce the self-discharge and are not prone to lithium deposition, but will obviously deteriorate a high-temperature cycling performance of the battery. The contents of the ethyl propionate and the propyl propionate in the electrolyte solution are limited to the above specific ranges, which can ensure that the battery has reduced self-discharge and has good high-temperature cycling performance while being not prone to lithium deposition.

A, B, and C satisfy the relationship that $2B + C \geq 400*(A - 0.5)$, indicating that values of A, B, and C satisfy the above equation.

It is found that control the ethyl propionate (EP) and the propyl propionate (PP) in the electrolyte solution based on the ratio of the thickness of the single-sided area to the double-sided region on the surface of the negative electrode plate, so that the dynamics of the single-sided area is improved at a high rate, thereby preventing lithium deposition of the battery, reducing the degree of self-discharge of the battery, and improving the stability and safety of the battery.

According to a specific implementation, the electrolyte solution further includes a first additive, and the first additive has a structure shown in Formula (I),

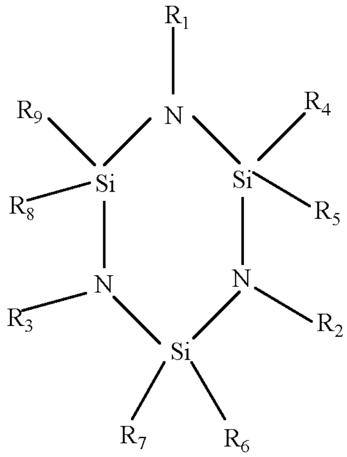

Formula (I).

$R_1$, $R_2$, $R_3$, $R_4$, $R_5$, $R_6$, $R_7$, $R_8$, and $R_9$ may be the same or different, and are independently selected from H, substituted or unsubstituted C1-C10 alkyl, or -CN.

C1-C10 alkyl may be represented as a linear or branched saturated alkyl having 1, 2, 3, 4, 5, 6, 7, 8, 9 or 10 carbon atoms.

In an example, the alkyl is selected from methyl, ethyl, propyl, butyl, amyl, hexyl, isopropyl, isobutyl, sec-butyl, tert-butyl, isoamyl, 2-methylbutyl, 1-methylbutyl, 1-ethylpropyl, 1,2-dimethylpropyl, neopentyl, 1,1-dimethylpropyl, 4-methylpentyl, 3-methylpentyl, 2-methylpentyl, 1-methylpentyl, 2-ethylbutyl, 1-ethylbutyl, 3,3-dimethylbutyl, 2,2-dimethylbutyl, 1,1-dimethylbutyl, 2,3-dimethylbutyl, 1,3-dimethylbutyl, or 1,2-dimethylbutyl, or an isomer of the alkyl.

In a preferred example, the substituted or unsubstituted alkyl is C1-C6 alkyl selected from methyl, ethyl, propyl, butyl, isopropyl, isobutyl, sec-butyl, tert-butyl, amyl, or hexyl.

More preferably, the substituted or unsubstituted alkyl may be C1-C3 alkyl selected from methyl, ethyl, n-propyl, or isopropyl.

The "substituted or unsubstituted C1-C10 alkyl" represents that the alkyl may be substituted or may not be substituted by any substituent, for example, when the alkyl is substituted by halogen, one H in the alkyl may be substituted by halogen, or a plurality of H may be substituted by halogen, or all H may be substituted by halogen.

At least one of $R_1$, $R_2$, and $R_3$ is -CN, indicating that the number of -CN in $R_1$, $R_2$, and $R_3$ may be 1, 2, or 3.

The substituent may be selected from halogen, -C(=O)-$R_a$, -C(=O)-O-C(=O)-$R_b$, $C_{6-14}$ aryl, or 5-14 membered heteroaryl.

The halogen may be selected from one or more of F, Cl, Br or I.

$R_a$ and $R_b$ may be the same or different and independently selected from C1-C10 alkyl.

According to a preferred implementation, $R_4$, $R_5$, $R_6$, $R_7$, $R_8$ and $R_9$ are independently selected from substituted C1-C6 alkyl, and $R_1$, $R_2$ and $R_3$ are all -CN; and the substituent is selected from -C(=O)-$R_a$, or -C(=O)-O-C(=O)-$R_b$, and $R_a$ and $R_b$ are independently selected from C1-C6 alkyl.

In a preferred example, $R_a$ and $R_b$ are independently selected from C1-C3 alkyl.

In an example, the first additive is selected one or more of the following structures:

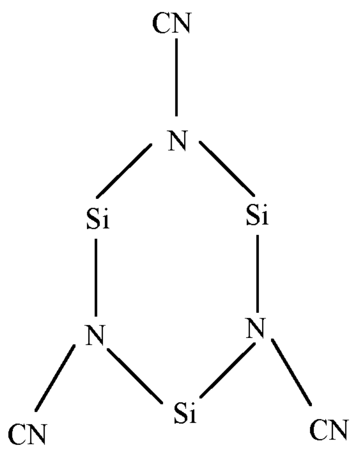
(I-1),

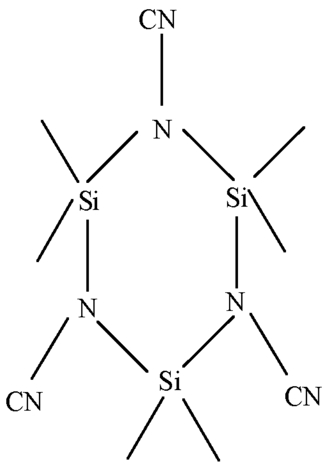
(I-2),

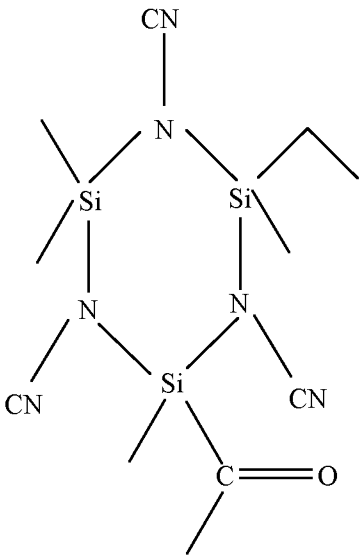
(I-3),

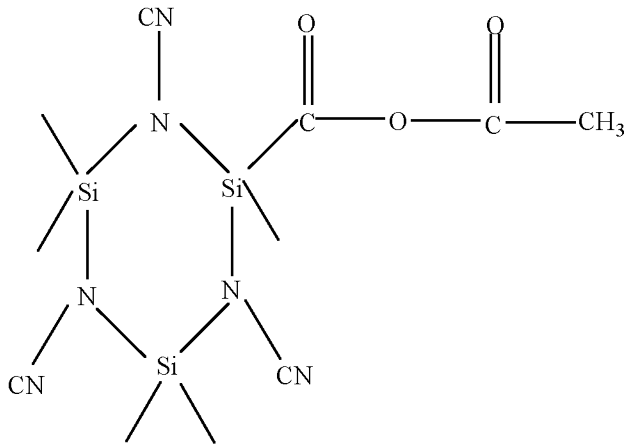
(I-4),

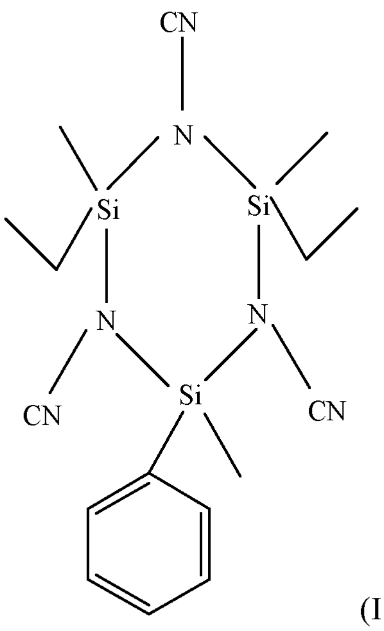
(I-5),

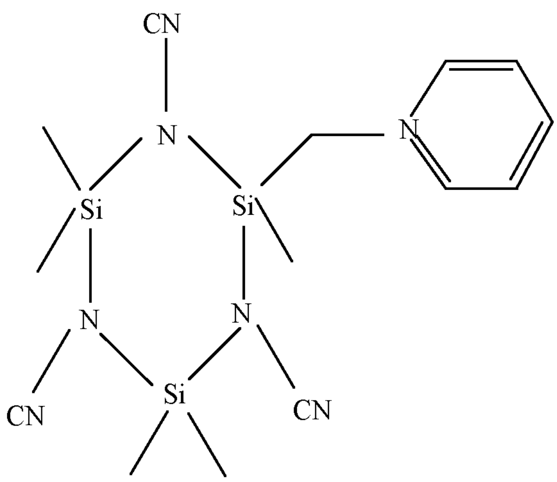
(I-6).

According to a specific implementation, based on the total weight of the electrolyte solution, a weight content of

the first additive ranges from 0.1 wt% to 5 wt% (for example, 0.1 wt%, 0.2 wt%, 0.5 wt%, 1 wt%, 1.5 wt%, 2 wt%, 2.5 wt%, 3 wt%, 3.5 wt%, 4 wt%, 4.5 wt%, or 5 wt%).

In an example, based on the total weight of the electrolyte solution, the weight content of the first additive ranges from 0.5 wt% to 2 wt%.

The electrolyte solution also may further include or not include a second additive.

In an example, the electrolyte solution further includes a second additive, and the second additive is selected from one or more of fluoroethylene carbonate, 1,3-propane sultone, 1,3-propene sultone, succinonitrile, adiponitrile, glycerol trinitrile, 1,3,6-hexanetricarbonitrile, lithium difluoro(oxalato)borate, lithium difluorophosphate, or lithium difluorobis(oxalato)phosphate.

In an example, based on the total weight of the electrolyte solution, a weight content of the second additive ranges from 0 wt% to 15 wt%. When the weight of the second additive is 0 wt %, it indicates that the electrolyte solution does not include the second additive.

In an example, based on the total weight of the electrolyte solution, the weight content of the second additive ranges from 0.01 wt% to 15 wt% (for example, 0.01wt%, 0.5 wt%, 1 wt%, 2 wt%, 3 wt%, 4 wt%, 5 wt%, 6 wt%, 7 wt%, 8 wt%, 9 wt%, 10 wt%, 12wt%, or 15 wt%).

In an example, based on the total weight of the electrolyte solution, the weight content of the second additive ranges from 5 wt% to 12 wt%.

According to a specific implementation, the electrolyte in the electrolyte solution is selected from a lithium salt.

In an example, the lithium salt is selected from one or more of lithium hexafluorophosphate ($LiPF_6$), lithium difluorophosphate ($LiPO_2F_2$), lithium difluoro(oxalato)borate (LiDFOB), lithium bis(fluorosulfonyl)imide (LiTFSI), lithium bis(trifluoromethanesulphonyl)imide, lithium difluorobis(oxalato)phosphate, lithium tetrafluoroborate, lithium bisoxalate borate, lithium hexafluoroantimonate, lithium hexafluoroarsenate, lithium bis (trifluoromethylsulfonyl)imine, lithium bis (pentafluoroethylsulfonyl)imine, (trifluoromethylsulfonyl)imine, or lithium bis (trifluoromethylsulfonyl)imine.

In an example, based on the total weight of the electrolyte solution, a weight content of the electrolyte ranges from 11 wt% to 18 wt% (for example, 11 wt%, 12 wt%, 13 wt%, 14 wt%, 15 wt%, 16 wt%, 17 wt%, or 18 wt%).

According to a specific implementation, the organic solvent further includes carbonate and/or carboxylate.

In an example, the carbonate is selected from one or more of the following fluorinated or unsubstituted solvents: ethylene carbonate (EC), propylene carbonate (PC), dimethyl carbonate, diethyl carbonate (DEC), or ethyl methyl carbonate.

In an example, the carboxylate is selected from one or more of the following fluorinated or unsubstituted solvents: propyl acetate, n-butyl acetate, isobutyl acetate, n-amyl acetate, isoamyl acetate, methyl butyrate, or ethyl n-butyrate.

A content of the carbonate and/or the carboxylate may be adjusted over a wide range. For example, when the weight contents of the various components above are less than 100%, the part less than 100% may be supplemented by carbonate and/or carboxylate.

The negative electrode plate includes a negative electrode current collector and a negative electrode material coated on a surface of the negative electrode current collector, and the negative electrode material includes a negative electrode active material, a conductive agent, and a binder.

In an example, the negative electrode current collector is a copper foil.

According to a specific implementation, the negative electrode active material includes a carbon-based active material and/or a silicon-based active material.

In an example, the carbon-based active material includes one or more of artificial graphite, natural graphite, mesocarbon microbead, hard carbon, or soft carbon.

In an example, the silicon-based active material is selected from one or more of nano silicon, a silicon oxide material ($SiO_x(0 < x < 2)$), or a silicon carbide material.

According to a specific implementation, the negative electrode active material includes a carbon-based active material and a silicon-based active material.

In an example, in the negative electrode active material, a mass ratio of the carbon-based active material to the silicon-based active material ranges from 1:0.1 to 1:19 (for example, 1:19, 1:18, 1:17, 1:16, 1:15, 1:14, 1:13, 1:12, 1:11, 1:10, 1:9, 1:8, 1:7, 1:6, 1:5, 1:4, 1:3, 1:2, 1:1, 1:0.7, 1:0.5, 1:0.3, or 1:0.1).

According to a specific implementation, based on a total weight of the negative electrode material, a content of the negative electrode active material ranges from 80 wt% to 99.8 wt% (for example, 80 wt%, 85 wt%, 90 wt%, 95 wt%, or 99.8 wt%), a content of the conductive agent ranges from 0.1 wt% to 10 wt% (for example, 0.1 wt%, 0.5 wt%, 1 wt%, 3 wt%, 5 wt%, 7 wt%, or 10 wt%), and a content of the binder ranges from 0.1 wt% to 10 wt% (for example, 0.1 wt%, 0.5 wt%, 1 wt%, 3 wt%, 5 wt%, 7 wt%, or 10 wt%).

Preferably, based on the total weight of the negative electrode material, the content of the negative electrode active material ranges from 90 wt% to 99.6 wt%, the content of the conductive agent ranges from 0.2 wt% to 5 wt%, and the content of the binder ranges from 0.2 wt% to 5 wt%.

According to a specific implementation, the battery further includes a positive electrode plate containing a

positive electrode active material and a separator.

The positive electrode plate may be a conventional positive electrode plate in the art, for example, the positive electrode plate includes a positive electrode current collector and a positive electrode material coated on a surface of either or both sides of the positive electrode current collector, and the positive electrode material includes a positive electrode active material, a conductive agent, and a binder.

In an example, the positive electrode active material is selected from one or more of transition metal lithium oxides, lithium iron phosphate, or a lithium-rich manganese-based material.

In an example, a chemical formula of the transition metal lithium oxides are $Li_{1+x}Ni_yCo_zM_{(1-y-z)}O_2$, where $-0.1 \le x \le 1$; $0 \le y \le 1$, $0 \le z \le 1$, and $0 \le y + z \le 1$; where M is one or more of Mg, Zn, Ga, Ba, Al, Fe, Cr, Sn, V, Mn, Sc, Ti, Nb, Mo, or Zr, for example, lithium cobalt oxide.

In an example, the positive electrode material of the battery includes lithium cobalt oxide.

In an example, the conductive agent is selected from one or more of conductive carbon black, acetylene black, ketjen black, conductive graphite, conductive carbon fiber, a carbon nanotube (for example, single-walled carbon nanotube and/or multi-walled carbon nanotube), metal powder, or carbon fiber.

In an example, the binder is selected from one or more of sodium carboxymethyl cellulose, styrene-butadiene rubber, styrene-butadiene latex, polytetrafluoroethylene, or polyethylene oxide.

According to a specific implementation, based on a total weight of the positive electrode material, a content of the positive electrode active material ranges from 80 wt% to 99.8 wt% (for example, 80 wt%, 85 wt%, 90 wt%, 95 wt%, or 99.8 wt%), a content of the conductive agent ranges from 0.1 wt% to 10 wt% (for example, 0.1 wt%, 0.5 wt%, 1 wt%, 3 wt%, 5 wt%, 7 wt%, or 10 wt%), and a content of the binder ranges from 0.1 wt% to 10 wt% (for example, 0.1 wt%, 0.5 wt%, 1 wt%, 3 wt%, 5 wt%, 7 wt%, or 10 wt%).

Preferably, based on the total weight of the positive electrode material, the content of the positive electrode active material ranges from 90 wt% to 99.6 wt%, the content of the conductive agent ranges from 0.2 wt% to 5 wt%, and the content of the binder ranges from 0.2 wt% to 5 wt%.

In an example, the battery is a lithium-ion battery, for example, a lithium cobalt battery, a ternary battery, or a lithium iron phosphate battery.

In a preferred example, the battery is a lithium cobalt battery.

In an example, the battery has a charge/discharge voltage ranging from 3 V to 4.45 V.

The following describes the present invention in detail by using embodiments. The embodiments described in the present invention are merely some, but not all of the embodiments of the present invention. All other embodiments obtained by a person of ordinary skill in the art based on the embodiments of the present invention without creative efforts fall within the protection scope of the present invention.

The following examples are used to illustrate the battery of the present invention.

Example 1

(1) Preparation of compositions

Organic solvent: 20 parts by weight of ethyl propionate (EP) and 10 parts by weight of propyl propionate (PP)

First additive: 1 part by weight of a first additive having a structure shown in Formula (I -2);

Second additive: 3 parts by weight of 1,3-propane sultone and 2 parts by weight of 1,3,6-hexanetricarbonitrile;

Lithium salt: 12.5 parts by weight of lithium hexafluorophosphate ($LiPF_6$); and

Other organic solvent: 6.5 parts by weight of fluoroethylene carbonate, 22.5 parts by weight of ethylene carbonate (EC), and 22.5 parts by weight of propylene carbonate (PC).

(2) Preparation of an electrolyte solution

In a glove box filled with argon gas ($H_2O$ < 0.1 ppm, $O_2$ < 0.1 ppm), EC/PC EP/PP were evenly mixed, and then fully dried lithium hexafluorophosphate ($LiPF_6$) was rapidly added to the mixture. After being dissolved, fluoroethylene carbonate, 1,3-propane sultone, 1,3,6-hexanetricarbonitrile, and a first additive having a structure shown in Formula (I-2) were added in the mixture and stirred evenly, and the required electrolyte solution was obtained after passing water content and free acid tests.

(3) Preparation of a negative electrode plate

A negative electrode active material artificial graphite, sodium carboxymethyl cellulose (CMC-Na), styrene-butadiene rubber, conductive carbon black (SP), and single-walled carbon nanotube (S) were mixed according to a mass ratio of 96:1.5:1.5:0.95:0.05, then deionized water was added, and a negative electrode active slurry was obtained under the action of a vacuum mixer. The negative electrode active slurry was evenly coated on two surfaces of a copper foil. The coated copper foil was aired at room temperature, then transferred to an oven at 80°C for 10 hours for drying, followed by cold pressing parameter adjusting and slitting, to obtain the required negative electrode plate with a thickness of X (mm) of a single-sided coating layer of the negative electrode and a thickness of Y (mm) of a double-sided coating layers of the negative electrode, and a ratio A of the thickness was shown in Table 1.

Group of Example 2

The group of this example is used to describe impacts produced when a weight content B wt % of ethyl propionate (EP) changes.

The group of this example was carried out with reference to Example 1, except that the weight content B wt% of the ethyl propionate (EP) was changed, and the total weight was adjusted to 100 (i.e., ethylene carbonate (EC) (75-B-C)/2 parts by weight, and propylene carbonate (PC) (75-B-C)/2 parts by weight) with the ethylene carbonate (EC) and the propylene carbonate (PC), and the parts by weight of other materials remained unchanged. See Table 1 for details.

Group of Example 3

The group of this example is used to describe impacts produced when a weight content C wt % of propyl propionate (PP) changes.

The group of this example was carried out with reference to Example 1, except that the weight content C wt% of the propyl propionate (EP) was changed, and the total weight was adjusted to 100 (i.e., ethylene carbonate (EC) (75-B-C)/2 parts by weight, and propylene carbonate (PC) (75-B-C)/2 parts by weight) with the ethylene carbonate (EC) and the propylene carbonate (PC), and the parts by weight of other materials remained unchanged. See Table 1 for details.

Group of Example 4

This group of example is used to describe impacts produced when a ratio A of a thickness of a coating layer of a single-sided area to a thickness of a coating layer of a double-sided region of a negative electrode plate changes.

The group of this example was carried out with reference to Example 1, except that A was changed and components of the electrolyte solution remained unchanged by adjusting cold pressure. See Table 1 for details.

Example 5

This example was carried out with reference to Example 1, except that the electrolyte solution did not contain the first additive. See Table 1 for details.

Example 6

This example was carried out with reference to Example 1, except that the electrolyte solution did not contain the second additive. See Table 1 for details.

Comparative Example 1

This example was carried out with reference to Example 1, except that the electrolyte solution was not added with the ethyl propionate (EP), but supplemented with the ethylene carbonate (EC) and the propylene carbonate (PC) (i.e., ethylene carbonate (EC) (75-C)/2 parts by weight, and propylene carbonate (PC) (75-C)/2 parts by weight), and the parts by weight of other materials remained unchanged. See Table 1 for details.

Comparative Example 2

This example was carried out with reference to Example 1, except that the electrolyte solution was not added with the propyl propionate (PP), and the parts by weight of the ethyl propionate (EP) were changed to 5, the electrolyte solution was supplemented with ethylene carbonate (EC) and propylene carbonate (PC) (i.e., ethylene carbonate (EC) (75-B)/2

parts by weight, and propylene carbonate (PC) (75-B)/2 parts by weight), and the parts by weight of other materials remained unchanged. See Table 1 for details.

Comparative Example 3

This example was carried out with reference to Example 1, except that the value of A was changed to 0.68 and components of the electrolyte solution remained unchanged by adjusting cold pressure. See Table 1 for details.

Table 1

| | Ratio of thickness of single-sided area to thickness of double-sided region (A) | Weight content of EP (B)/% | Weight content of PP (C)/% | (2B+C)/(-A-0.5) |
|---|---|---|---|---|
| Example 1 | 0.55 | 20 | 10 | 1000 |
| Example 2a | 0.55 | 10 | 10 | 600 |
| Example 2b | 0.55 | 30 | 10 | 1400 |
| Example 3a | 0.55 | 20 | 20 | 1200 |
| Example 3b | 0.55 | 20 | 4 | 880 |
| Example 3c | 0.55 | 20 | 40 | 1600 |
| Example 4a | 0.53 | 20 | 10 | 1666 |
| Example 4b | 0.57 | 20 | 10 | 714 |
| Example 5 | 0.55 | 20 | 10 | 1000 |
| Example 6 | 0.55 | 20 | 10 | 1000 |
| Comparative Example 1 | 0.55 | 0 | 10 | 200 |
| Comparative Example 2 | 0.55 | 5 | 0 | 200 |
| Comparative Example 3 | 0.68 | 20 | 10 | 277 |

Preparation Example

The electrolyte solutions and the negative electrode plates obtained in the examples and the comparative examples were used to prepare batteries respectively according to the following manners.

(1) Preparation of a positive electrode plate

A positive electrode active material ($LiCoO_2$), polyvinylidene fluoride (PVDF), SP (super P), and a carbon nanotube (CNT) were mixed according to a mass ratio of 96:2:1.5:0.5, then N-methylpyrrolidone (NMP) was added, and stirred under the action of a vacuum mixer until the mixed system became an even flowing positive electrode active slurry. The positive electrode active slurry was evenly coated on two surfaces of an aluminium foil. The coated aluminium foil was baked, followed by rolling and cutting, to obtain the required positive electrode plate.

(2) Preparation of a negative electrode plate

The negative electrode plates obtained in the examples and comparative examples were used respectively.

(3) Electrolyte solution

The electrolyte solutions obtained in the examples and comparative examples were used respectively.

(4) Preparation of a lithium-ion battery

The positive electrode plate in the step (1), the negative electrode plate in the step (2) and a separator were stacked in the order of the positive electrode plate, the separator and the negative electrode plate, and then wound to obtain a battery cell. The battery cell was placed in an outer packaging aluminium foil, the electrolyte solution in the step (3)

was injected into the outer packaging, and after processes such as vacuum packaging, standing, forming, shaping, and sorting, the battery was obtained.

Test Example

The batteries obtained in the examples and the comparative examples were respectively tested as follows:

(1) Direct-charge lithium deposition test at 10°C and 1C

The battery of Table 1 was charged to a cut-off voltage at a rate of 1C at 10°C and a cut-off current of 0.025 C, allowed to stand for 5 minutes, then discharged to the cut-off voltage at a rate of 1C, then charge-discharge cycling was continuously performed. After 50 cycles, the battery was charged to the cut-off voltage and the cutoff current at the rate of 1C, allowed to stand for 1 hour, and then disassembled to observe whether a significant lithium deposition status occurred in a negative electrode of the battery. If there was a silver-white substance in the negative electrode of the battery, it indicated "lithium deposition", and if there was no silver-white substance in the negative electrode of the battery, it indicated "no lithium deposition".

(2) Battery self-discharge k-value test

The batteries in Table 1 (3 batteries in each example) were charged to a cut-off voltage at a rate of 1C at 25°C, and a cut-off current was 0.025 C. After standing for 5 minutes, open-circuit voltages $OCV_1$ (in unit of volt V) of the lithium-ion batteries were tested. Fully charged battery cells/batteries were left in open circuit status at (25±2)°C for 24 hours, and voltages $OCV_2$ after the batteries were left in open circuit status were tested, and then self-discharge coefficient k values of the lithium-ion batteries were calculated:

$$K = (OCV_1 - OCV_2)/24.$$

(3) Stability test

1) 25°C normal-temperature cycle test

The batteries in Table 1 were charged and discharged at 25°C within a charge-discharge cut-off voltage range (where a charge cut-off voltage was 4.45 V, and a discharge cut-off voltage was 3 V) at a rate of 1C. A discharge capacity in the first cycle of the test was measured and recorded as x1 mAh, and a discharge capacity in the $N^{th}$ cycle was measured and recorded as y1 mAh. The discharge capacity in the $N^{th}$ cycle was divided by the discharge capacity in the first cycle to obtain a cycling capacity retention rate of the $N^{th}$ cycle, that is, R1 = y1/x1. The corresponding cycle number when the cycling capacity retention rate R1 was 90% was recorded.

2) 45°C high-temperature cycle test

The batteries in Table 1 were charged and discharged at 45°C within a charge-discharge cut-off voltage range (where a charge cut-off voltage was 4.45 V, and a discharge cut-off voltage was 3 V) at a rate of 1C. A discharge capacity in the first cycle of the test was measured and recorded as x2 mAh, and a discharge capacity in the $N^{th}$ cycle was measured and recorded as y2 mAh. The discharge capacity in the $N^{th}$ cycle was divided by the discharge capacity in the first cycle to obtain a cycling capacity retention rate of the $N^{th}$ cycle, that is, R2 = y2/x2. The corresponding cycle number when the cycling capacity retention rate R2 was 80% was recorded.

The results obtained were recorded in Table 2.

Table 2

| | Status of direct-charge lithium deposition at 10°C and 1C | Self-discharge k value of battery/(mV/h) | 25°C normal-temperature cycle test | 45°C high-temperature cycle test |
|---|---|---|---|---|
| Example 1 | No lithium deposition | 0.046 | 862 | 523 |
| Example 2a | No lithium deposition | 0.072 | 834 | 537 |

(continued)

| | Status of direct-charge lithium deposition at 10°C and 1C | Self-discharge k value of battery/(mV/h) | 25°C normal-temperature cycle test | 45°C high-temperature cycle test |
|---|---|---|---|---|
| Example 2b | No lithium deposition | 0.041 | 871 | 498 |
| Example 3a | No lithium deposition | 0.044 | 868 | 512 |
| Example 3b | No lithium deposition | 0.051 | 855 | 527 |
| Example 3c | No lithium deposition | 0.040 | 876 | 492 |
| Example 4a | No lithium deposition | 0.039 | 877 | 490 |
| Example 4b | No lithium deposition | 0.067 | 838 | 510 |
| Example 5 | No lithium deposition | 0.092 | 811 | 528 |
| Example 6 | No lithium deposition | 0.048 | 852 | 487 |
| Comparative Example 1 | Lithium deposition | 0.153 | 478 | 538 |
| Comparative Example 2 | Lithium deposition | 0.151 | 512 | 532 |
| Comparative Example 3 | Lithium deposition | 0.243 | 518 | 487 |

It may be learned from Table 2 by comparing comparative examples and examples that, the degree of self-discharge of the battery obtained in the examples is obviously reduced, and lithium deposition during cycling can be prevented, which indicates that the dynamics of the single-sided region is improved by matching the compaction condition of the single-sided region with the carboxylates (i.e., the ethyl propionate (EP) and the propyl propionate (PP)) in the electrolyte solution, thereby preventing lithium deposition, improving the safety of the battery, and reducing the degree of self-discharge of the battery.

The foregoing describes in detail a preferred implementation of the present invention. However, the present invention is not limited thereto. Within the scope of the technical concepts of the present invention, various simple variations may be implemented to the technical solutions of the present invention, including combinations of technical features in any other suitable manner. These simple variations and combinations shall also be considered as the invention of the present invention and shall fall within the protection scope of the present invention.

## Claims

1. A battery, **characterized in that** the battery comprises a negative electrode plate and an electrolyte solution, a surface of the negative electrode plate is divided into a single-sided region and a double-sided region; the double-sided region is a double-side coated area, and a total thickness of double-sided coating layers is Y mm; the single-sided region is a single-side coated area, the other side corresponding to the single-sided region is a foil uncoating region, and a thickness of a single-sided coating layer is X mm; a ratio A of a thickness of the single-sided region to a thickness of the double-sided region ranges from 0.5 to 0.65; the electrolyte solution comprises an organic solvent, and the organic solvent comprises ethyl propionate and/or propyl propionate; based on a total weight of the electrolyte solution, a weight content B wt% of the ethyl propionate ranges from 0 wt% to 50 wt%, and a weight content C wt% of the propyl propionate ranges from 0 wt% to 60 wt%; then, A, B and C satisfy a relationship that $2B + C \geq 400*(A - 0.5)$.

2. The battery according to claim 1, **characterized in that** the ratio A of the thickness of the single-sided region to the thickness of the double-sided region ranges from 0.53 to 0.57.

3. The battery according to claim 1, **characterized in that** based on the total weight of the electrolyte solution, the weight content B wt% of the ethyl propionate ranges from 5 wt% to 25 wt%, and the weight content C wt% of the propyl propionate ranges from 5 wt% to 35 wt%.

4. The battery according to any one of claims 1 to 3, **characterized in that** the electrolyte solution further comprises a first additive, and the first additive has a structure shown in Formula (I),

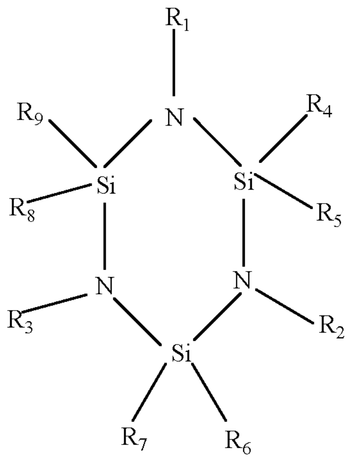

Formula (I),

wherein $R_1$, $R_2$, $R_3$, $R_4$, $R_5$, $R_6$, $R_7$, $R_8$ and $R_9$ are independently selected from H, substituted or unsubstituted C1-C10 alkyl, or -CN, and at least one of $R_1$, $R_2$ and $R_3$ is -CN; and the substituent is selected from halogen, -C(=O)-$R_a$, -C(=O)-O-C(=O)-$R_b$, $C_{6-14}$ aryl, or 5-14 membered heteroaryl, and $R_a$ and $R_b$ are independently selected from C1-C10 alkyl.

**5.** The battery according to claim 4, **characterized in that** $R_4$, $R_5$, $R_6$, $R_7$, $R_8$ and $R_9$ are independently selected from substituted C1-C6 alkyl, and $R_1$, $R_2$ and $R_3$ are all -CN; and the substituent is selected from -C(=O)-$R_a$, or -C(=O)-O-C(=O)-$R_b$, and $R_a$ and $R_b$ are independently selected from C1-C6 alkyl.

**6.** The battery according to claim 4 or 5, **characterized in that** the first additive is selected from one or more of the following structures:

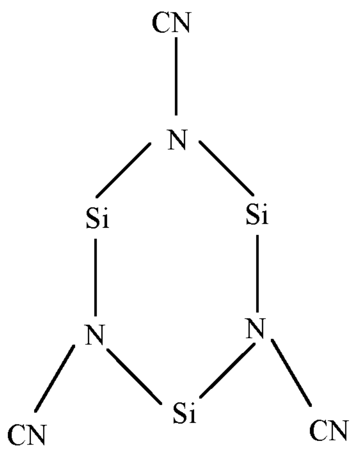

(I-1),

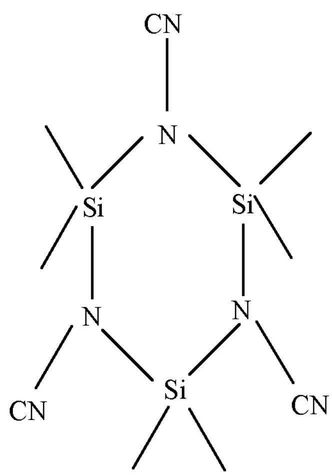

(I-2),

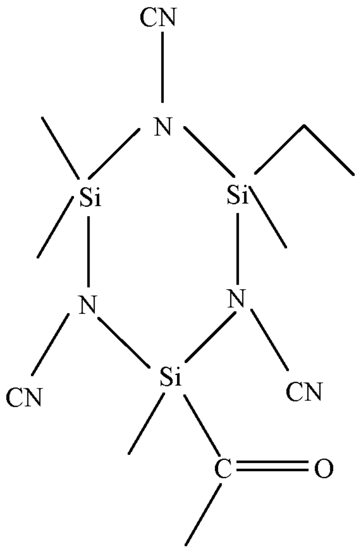

(I-3),

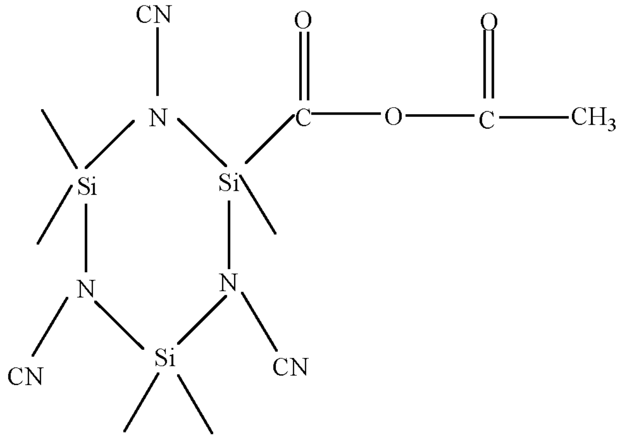

(I-4),

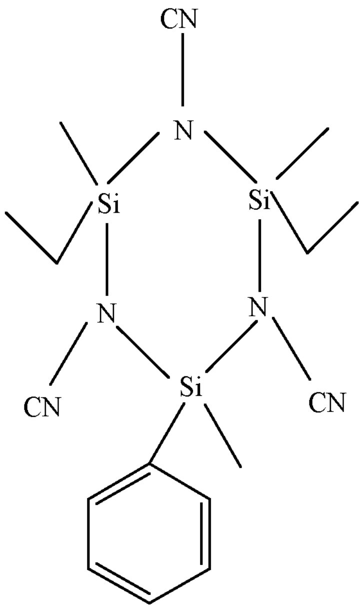

(I-5),

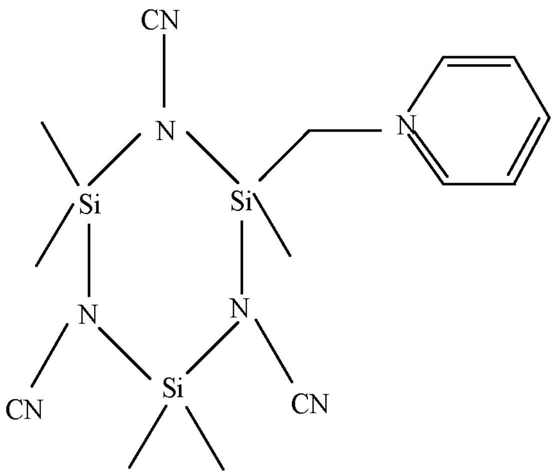

(I-6).

7. The battery according to any one of claims 4 to 6, **characterized in that** based on the total weight of the electrolyte solution, a weight content of the first additive ranges from 0.1 wt% to 5 wt%, and preferably, ranges from 0.5 wt% to 2 wt%.

8. The battery according to any one of claims 1 to 7, **characterized in that** the electrolyte solution further comprises a second additive, and the second additive is selected from one or more of fluoroethylene carbonate, 1,3-propane sultone, 1,3-propene sultone, succinonitrile, adiponitrile, glycerol trinitrile, 1,3,6-hexanetricarbonitrile, lithium difluoro(oxalato)borate, lithium difluorophosphate, or lithium difluorobis(oxalato)phosphate.

9. The battery according to claim 8, **characterized in that** based on the total weight of the electrolyte solution, a weight content of the second additive ranges from 0 wt% to 15 wt%, and preferably, ranges from 5 wt% to 12 wt%.

10. The battery according to any one of claims 1 to 9, **characterized in that** the negative electrode plate comprises a negative electrode current collector and a negative electrode material coated on a surface of the negative electrode current collector, and the negative electrode material comprises a negative electrode active material, a conductive agent, and a binder; and/or

the negative electrode active material comprises a carbon-based active material and/or a silicon-based active

material; and/or

the carbon-based active material comprises one or more of artificial graphite, natural graphite, mesocarbon microbead, hard carbon, or soft carbon; and/or

the silicon-based active material is selected from one or more of nano silicon, a silicon oxide material, or a silicon carbide material.

**11.** The battery according to claim 10, **characterized in that** in the negative electrode active material, a mass ratio of the carbon-based active material to the silicon-based active material ranges from 1:0.1 to 1:19.

**12.** The battery according to any one of claims 1 to 11, **characterized in that** the battery further comprises a positive electrode plate containing a positive electrode active material and a separator, the positive electrode plate comprises a positive electrode current collector and a positive electrode material coated on a surface of either or both sides of the positive electrode current collector, and the positive electrode material comprises a positive electrode active material, a conductive agent, and a binder; and/or

the positive electrode active material is selected from one or more of transition metal lithium oxides, lithium iron phosphate, or a lithium-rich manganese-based material; and/or

a chemical formula of the transition metal lithium oxides are $Li_{1+x}Ni_yCo_zM_{(1-y-z)}O_2$, wherein $-0.1 \leq x \leq 1$; $0 \leq y \leq 1$, $0 \leq z \leq 1$, and $0 \leq y + z \leq 1$; wherein M is one or more of Mg, Zn, Ga, Ba, Al, Fe, Cr, Sn, V, Mn, Sc, Ti, Nb, Mo, or Zr.

**13.** The battery according to any one of claims 1 to 12, **characterized in that** the positive electrode material of the battery comprises lithium cobalt oxide.

**14.** The battery according to any one of claims 1 to 13, **characterized in that** the battery is a lithium-ion battery, and preferably, is a lithium cobalt battery.

**15.** The battery according to any one of claims 1 to 14, **characterized in that** the battery has a charge/discharge voltage ranging from 3 V to 4.45 V.

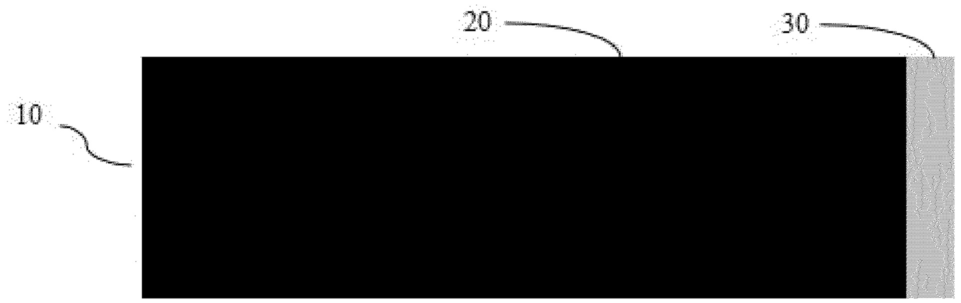


FIG. 1

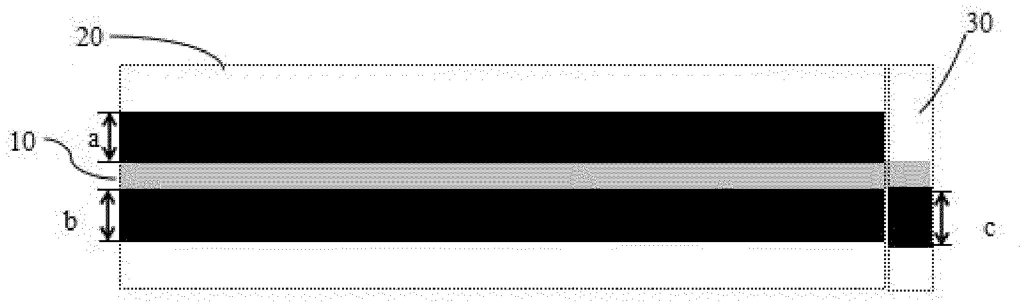


FIG. 2

**INTERNATIONAL SEARCH REPORT**

International application No. **PCT/CN2023/121572**

**A. CLASSIFICATION OF SUBJECT MATTER**

H01M10/0525(2010.01)i; H01M10/0567(2010.01)i; H01M10/0566(2010.01)i

According to International Patent Classification (IPC) or to both national classification and IPC

**B. FIELDS SEARCHED**

Minimum documentation searched (classification system followed by classification symbols)

IPC:H01M10/-

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI, STN: 丙酸丙酯, 丙酸乙酯, 电解液, 电解质, 覆膜, 负极, 活性, 激光, 清洗, 去除, 添加剂, 涂层, 涂覆, battery, coat, thickness, ethyl propionate, propyl propionate, electrolyte

**C. DOCUMENTS CONSIDERED TO BE RELEVANT**

| Category* | Citation of document, with indication, where appropriate, of the relevant passages | Relevant to claim No. |
|---|---|---|
| PX | CN 115548423 A (ZHUHAI COSMX BATTERY CO., LTD.) 30 December 2022 (2022-12-30)<br>entire description | 1-15 |
| X | CN 112582583 A (DONGGUAN VEKEN BATTERY CO., LTD.) 30 March 2021 (2021-03-30)<br>description, paragraphs [0010]-[0025] and [0039]-[0049] | 1-3, 8-15 |
| Y | CN 112582583 A (DONGGUAN VEKEN BATTERY CO., LTD.) 30 March 2021 (2021-03-30)<br>description, paragraphs [0010]-[0025] and [0039]-[0049] | 4-7 |
| Y | CN 110808412 A (NINGDE CONTEMPORARY AMPEREX TECHNOLOGY CO., LTD.) 18 February 2020 (2020-02-18)<br>claims 1-3 | 4-7 |
| A | CN 105470519 A (TIANJIN EV ENERGIES CO., LTD.) 06 April 2016 (2016-04-06)<br>entire description | 1-15 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **04 December 2023** | **08 December 2023** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**

International application No.
**PCT/CN2023/121572**

**C. DOCUMENTS CONSIDERED TO BE RELEVANT**

| Category* | Citation of document, with indication, where appropriate, of the relevant passages | Relevant to claim No. |
|---|---|---|
| A | CN 105355921 A (GUANGDONG ZHUGUANG NEW ENERGY TECHNOLOGY CO., LTD.) 24 February 2016 (2016-02-24)<br>entire description | 1-15 |
| A | US 2011186553 A1 (PHOENIX SILICON INTERNATIONAL CORPORATION) 04 August 2011 (2011-08-04)<br>entire description | 1-15 |

Form PCT/ISA/210 (second sheet) (July 2022)

**INTERNATIONAL SEARCH REPORT**
**Information on patent family members**

International application No.
**PCT/CN2023/121572**

| Patent document cited in search report | | | Publication date (day/month/year) | Patent family member(s) | | | Publication date (day/month/year) |
|---|---|---|---|---|---|---|---|
| CN | 115548423 | A | 30 December 2022 | | None | | |
| CN | 112582583 | A | 30 March 2021 | | None | | |
| CN | 110808412 | A | 18 February 2020 | | None | | |
| CN | 105470519 | A | 06 April 2016 | | None | | |
| CN | 105355921 | A | 24 February 2016 | | None | | |
| US | 2011186553 | A1 | 04 August 2011 | US | 8309880 | B2 | 13 November 2012 |

Form PCT/ISA/210 (patent family annex) (July 2022)